# EUROPEAN PATENT SPECIFICATION

(11) **EP 3 241 710 B1**
(45) Date of publication and mention of the grant of the patent: **03.04.2019**
(21) Application number: 16168092.1
(22) Date of filing: 03.05.2016
(51) Int. Cl.: B60R 9/058

(54) **LOAD CARRIER FOOT**
LASTTRÄGERFUSS
PIED DE PORTE CHARGE

(43) Date of publication of application: 08.11.2017
(73) Proprietor: Mont Blanc Industri AB, 516 90 Dalsjöfors (SE)
(72) Inventor: Sörqvist, Christofer, 523 35 ULRICEHAMN (SE)
(74) Representative: AWA Sweden AB

(56) References cited:
- EP-A1- 1 683 679
- WO-A1-2011/072066
- DE-A1-102011 083 358

## Description

### Technical field of the Invention

The present invention relates to a load carrier foot for attaching a load carrier bar to a vehicle.

### Technical Background

There are various reasons for transporting luggage, goods and/or other articles on the roof of a vehicle. For example, the internal space in the vehicle may be limited, or dirty and soiled luggage are undesired to store and transport inside e.g. the trunk of the vehicle.

Thus, load carrier arrangements for transporting luggage, goods and/or other articles on the roof of a vehicle have been developed, see e.g. EP 1 683 679 showing the preamble of claim 1. A typical load carrier arrangement comprises at least one load carrier bar which is arranged over the roof of the vehicle transversal to the driving direction of the vehicle. At each end of the load carrier bar, a respective load carrier foot (also referred to as a mounting foot) is arranged to hold a respective end portion of the load carrier bar e.g. by means of a fastening arrangement comprising e.g. a rivet, or a screw and nut arrangement.

Furthermore, each load carrier foot rests on, or is attached to, the roof of the vehicle, or alternatively a roof rack or roof railing of the vehicle. Thus, each load carrier foot typically comprises a clamping member which clamps around the vehicle roof or roof rack of the vehicle. The clamping force which the clamping member exerts on the vehicle roof or roof rack is often supplied by a tensioning mechanism such as e.g. a lever arm. The clamping force is sometimes adjustable by an adjustable mechanism, for example a screw which is rotated into a receiving element (e.g. a nut) until a suitable clamping force is achieved. This is, for example, shown in EP 1 683 679.

However, the tensioning mechanism is associated with certain problems. For example, the person installing the load carrier foot to the vehicle (also referred to as a user of the load carrier arrangement) might find it troublesome to ensure that the clamping force is sufficient and/or worries that the clamping force is too large. Thus, the user may find it hard to adjust the adjustable mechanism correctly, as he/she might be unsure of how tight the adjustable mechanism should be adjusted.

There is thus a need for improving the state of the art to provide a load carrier foot which at least partly solves these problems.

### Summary of the Invention

It is an object of the present invention to improve the current state of the art, to at least partly solve the above problem and to provide an improved load carrier foot.

The invention is based on the insight that by providing a load carrier foot with two different types of means for moving a clamping member of the load carrier foot, namely a lever arm and an adjustment means, which are configured to be used interchangeably, the clamping of the clamping member to the vehicle may be more precisely controlled, e.g. the clamping force of which the clamping member clamps the vehicle may be more precisely controlled. More specifically, by dividing the movement of the lever arm from its fully open position to its clamped state into two separate movements, namely a first pivoting movement and a second pivoting movement, the clamping member may first be arranged in close proximity to the surface of the vehicle to be clamped (by the first pivoting movement), then be positioned in contact with said surface to be clamped by the adjustment means, and finally be clamped to said surface to be clamped by the lever arm (by the second pivoting movement). Thus, the second pivoting movement is well defined as it will start from a state in which the clamping member is in contact with said surface to be clamped, and end in the clamped state.

According to a first aspect of the present invention, a load carrier foot for attaching a load carrier bar to a vehicle is provided. The load carrier foot comprises:
a body arrangement having a vehicle support surface adapted to be positioned against a first surface of the vehicle,
a lever arm arrangement comprising a cam portion having a pivotable axle, and a pivotable lever arm connected to said pivotable axle;
a clamping member being operatively connected to said cam portion and said lever arm, said clamping member having a vehicle clamping portion configured to clamp a second surface of the vehicle,
an adjustment arrangement having adjustment means and an elongated connecting member, wherein said elongated connecting member connects said lever arm arrangement and said clamping member, and wherein said adjustment means is adapted to move said clamping member along said elongated connecting member,
wherein said lever arm arrangement is adapted to move said clamping member from a fully open state to a pre-setting state by a first pivoting movement of said lever arm, and wherein said adjustment means is adapted to move said clamping member from said pre-setting state to a contact state in which said vehicle clamping portion is in contact with said second surface of the vehicle, and
wherein said lever arm arrangement is adapted to move said clamping member from said contact state to a clamped state in which said vehicle clamping portion clamps said second surface of the vehicle, by a second pivoting movement of said lever arm,
wherein said load carrier foot further comprises indexing means indicating to the user that said clamping member is arranged in its pre-setting state.

Hereby, the user installing the load carrier foot to the vehicle may be more confident with how tight the clamping member clamps to the second surface of the vehicle, as the indexing means is configured to indicate to the user that the pre-setting state is reached, and as the adjustment arrangement is configured to move the clamping member to said contact state, which results in a well defined starting point for the second pivoting movement (i.e. the clamping movement) of the lever arm. Thus, as the load carrier foot is configured with a lever arm which may be moved in accordance with the second pivoting movement, i.e. be configured to move said clamping member from said contact state to said clamping state, the second pivoting movement is well defined and the user will be confident with how tight the clamping member clamps the second surface of the vehicle.

Furthermore, by providing the load carrier foot with a tensioning mechanism (as the lever arm arrangement) and an adjustment mechanism (as the adjustment arrangement) which are configured to be used interchangeably, the load carrier foot may quickly and with a well-defined clamping force be attached to the vehicle. That is, that the lever arm of the lever arm arrangement is configured to move the clamping member from its fully open state to its pre-setting state; that the adjustment means of the adjustment arrangement is configured to move the clamping member from its pre-setting state to its contact state; and that the lever arm of the lever arm arrangement is configured to move the clamping member from its contact state to its clamped state, provides a quick and a well-defined clamping of the clamping member to the second surface of the vehicle. In the clamped state, a clamping force is present between said vehicle support surface of said body arrangement, and said vehicle clamping portion of said clamping member, thereby holding the load carrier foot to the vehicle.

In the pre-setting state, the vehicle clamping portion of the clamping member is in close proximity to, but no in contact with, the second surface of vehicle. Thus, as the indexing means is configured to indicate to the user that the pre-setting state of the clamping member has been reached, the indexing means is also configured to indicate to the user that the vehicle clamping portion of the clamping member is in close proximity to the second surface of the vehicle. Here, in close proximity implies that the vehicle clamping portion is close enough to the second surface of the vehicle for the adjustment arrangement to be able to move the clamping member into its contacts state. Correspondingly, the indexing means is configured to indicate to the user that the clamping member is positioned in such a way that the adjustment arrangement may move the clamping member into its contact state. The indexing means may also be referred to as indication means.

It should be understood that the lever arm arrangement typically may arrange the clamping member in various open states, i.e. states in which the clamping member, or at least the vehicle clamping portion of the clamping member, is distant from the second surface of the vehicle. It should further be noted that said pre-setting state is an example of an open state, thus the pre-setting state may be referred to as a first open state, or as an indexing indicating open state as the indexing means are configured to indicate to the user that the pre-setting state has been reached when moving the clamping member from the fully open state. Moreover, it should be noted that the indexing means is configured to indicate to the user that the pre-setting state has been reached from any other open state of the clamping member, such as e.g. the fully open state as previously described.

It should further be noted that the adjustment arrangement is configured to move the clamping member from an open state, as the pre-setting state, into its contacting state. Thus, in the pre-setting state, the clamping member is prepared for being moved into contact with the second surface of the vehicle by the adjustment arrangement, and in the contact state the clamping member is prepared for being clamped to the second surface of the vehicle by the lever arm arrangement.

In the clamped state a clamping force between said vehicle support surface and said vehicle clamping member portion is present. The clamped state may also be referred to a fully clamped state. According to at least one example embodiment, there may be other states in between the contact state and the fully clamped state, such as e.g. various intermediate states where the clamping force is smaller than in the fully clamped state.

According to at least one example embodiment, the fully open state, the per-setting state, and the clamped state are pre-defined states. According to at least one example embodiment, the components of the load carrier foot, such as e.g. the clamping member, the lever arm arrangement and the indexing means, are adapted in such a way that said pre-setting state is predefined.

According to at least one example embodiment, the indexing means is adapted to visually, by sound, and/or by sensory feedback, indicate to the user that said pre-setting state has been reached. For example, a drawn line in the body arrangement may visually indicate to the user that the lever arm should not be moved pass this line before moving the clamping member into its contact state by the adjustment arrangement. In another example, a sound is transmitted, e.g. by that the lever arm interacts with a sound-generating element as the pre-setting state is reached.

According to at least one example embodiment, said indexing means is adapted to at least temporarily prevent lever arm induced movement of the clamping member.

In other words, the movement of the lever arm is at least temporarily prevented, hindered or by other means obstructed. This temporarily lever arm prevention means may e.g. be embodied as a torque increasing means in the pivotable axle of the lever arm arrangement, or as a physical stop engaging with the lever arm.

That the indexing means is adapted to at least temporarily prevent lever arm induced movement, typically means that an increased force is needed to move the lever arm out of its current position. Stated differently, when the lever arm arrangement has arranged the clamping member in its pre-setting state, the indexing means is adapted to at least temporarily hold the lever arm in its current position.

Hereby, the indexing means is adapted for sensory feedback to the user by means of the increased force needed to move lever arm out of position, and the user will know when the pre-setting state has been reached from another open state of the clamping member (such as e.g. from the fully open state). Thus, according to at least one example embodiment, the indexing means is adapted to indicate to the user that said pre-setting state has been reached by sensory feedback to the user.

Moreover, by arranging the indexing means to at least temporarily prevent lever arm induced movement, self-induced movement of the lever arm (e.g. owing to the dead weight of the lever arm) is prevented or at least reduced. Another advantage of arranging the indexing means to at least temporarily prevent lever arm induced movement is that the lever arm may be fixed in position when the user moves the clamping member from its pre-setting state to its contact state by the adjustment arrangement.

It should be noted that lever arm induced movement of the clamping member is referring to movement of the clamping member by the lever arm and the lever arm arrangement. Correspondingly, adjustment means induced movement of the clamping member is referring to movement of the clamping member by the adjustment means and the adjustment arrangement.

According to at least one example embodiment, said indexing means comprises a male and female connecting arrangement.

Hereby, the above mentioned at least partly temporarily prevention of the lever arm induced movement of the clamping member, may be embodied by the male and female connecting arrangement. Preferably, the male and female connecting arrangement is arranged at least partly on external surface of the load carrier foot (i.e. surface facing an outside of the load carrier foot), such as e.g. external surfaces of the lever arm and body arrangement respectively.

According to at least one example embodiment, male and female connecting arrangement is arranged as a snap-lock.

According to at least one example embodiment, said male and female connecting arrangement comprises a male protrusion arranged in an outer surface of the body arrangement or of the lever arm, and a female indentation arranged in an outer surface of the other one of the lever arm and the body arrangement, said male protrusion being adapted to engage with said female indentation when said lever arm arrangement is in its first open state.

Hereby, the above mentioned at least partly temporarily prevention of the lever arm induced movement of the clamping member, may be embodied by the male protrusion engaging with said female indentation. Additionally, the male protrusion and the female indentation may be adapted in such a way that upon engagement with each other, an indication sound is transmitted which further facilitates in the process of indicating for the user that the per-setting state has been reached.

When the lever arm is to be moved out of a position in which the male protrusion engages the female indentation, a relatively larger force needs to be exerted on the lever arm in order to overcome the frictional force provided by the male and female connecting arrangement.

Preferably, the outer surfaces of the lever arm and the body arrangement in which the male and female connecting arrangement is provided, are facing each other, at least when said clamping member is in its pre-setting state,

According to at least one example embodiment, said elongated connecting member is connected to said cam portion, and wherein said cam portion upon pivoting said lever arm is adapted to move at least partly in a direction away from said clamping member in order to move said vehicle clamping portion closer to said second surface of the vehicle.

Thus, the cam portion comprises an eccentric connecting portion to which the elongated connecting member is operatively connected (e.g. by being directly connected) to. The eccentric connecting portion is eccentrically arranged compared to the pivotable axle. Thus, as the lever arm (which is connected to the pivotable axle) pivots, the eccentric connecting portion is moved relative the pivotable axle, and as described above, and may be moved in a direction away from said clamping member whereby said elongated connecting member, which is operatively connected (e.g. by being directly connected) to the clamping member, moves said clamping member towards said second surface of the vehicle.

Thus, the elongated connecting member connects the lever arm arrangement and the clamping member, and is thus used to transfer force when moving the clamping member by the lever arm, while also being comprised in the adjustment arrangement and thus used to transfer force when moving the clamping member by the adjustment means.

According to at least one example embodiment, said adjustment means are adapted to rotate said elongated connecting member, wherein said elongated connecting member threadedly engages said clamping member in order for said clamping member to be movable along said elongated connecting member upon rotation of said elongated connecting member.

In other words, as the adjustment means is connected to the elongated connecting member, rotating said adjustment means results in a rotation of said elongated connecting member. Thus, as the elongated connecting member threadedly engages the clamping member, for example by that the clamping member is provided with a through hole having internal threads through which a portion of said elongated connecting member having externally arranged matching threads runs, the clamping member may be moved along said elongated connecting member upon rotation of the elongated connecting member. In the example given above, the external threads of the portion of the elongated connecting member push (upon rotation of the elongated connecting member) on the internal threads of the through hole and thereby move the clamping member along the elongated connecting member.

The elongated connecting member may be connected to the cam portion of the lever arm arrangement in a rotational-free manner, for example by a blind bore being adapted to hold an end portion of the elongated connecting member, wherein said end portion may freely rotate within the blind bore.

According to at least one example embodiment, said lever arm is arrangeable in a first position when said clamping member is in its fully open state, and is arrangeable in a second position when said clamping member is in its pre-setting state, and wherein a movement of said lever arm between its first position to its second position is defined as said first pivoting movement.

According to at least one example embodiment, the angle between said first position and said second position of said lever arm is predefined.

That is, the angle of which the lever arm is arranged to pivot between its first position and its second position (i.e. the rotational angle of said first pivoting movement) is predefined. The angle may e.g. be between 20° and 45°, such as e.g. between 25° and 40°, for example 30° or around 30°. Stated differently, and according to at least one example embodiment, said first pivoting movement is predefined, such as the rotational angle of said first pivoting movement is predefined.

The first position may e.g. be an end position of the lever arm, in which the lever arm is arranged when the clamping member is in its fully open state.

According to at least one example embodiment, said lever arm is arrangeable in a third position when said clamping member is in its clamped state, wherein said lever arm is in its second position when said clamping member is in its contact state, and wherein a movement of said lever arm between its second position to its third position is defined as said second pivoting movement.

According to at least one example embodiment, the angle between said second position and said third position of said lever arm is predefined.

That is, the angle of which the lever arm is arranged to pivot between its second position and its third position (i.e. the rotational angle of said second pivoting movement) is predefined. The angle may e.g. be between 45° and 70°, such as e.g. between 50° and 65°, for example around 55°-60°. Stated differently, and according to at least one example embodiment, said second pivoting movement is predefined, such as the rotational angle of said second pivoting movement is predefined.

According to at least one example embodiment, the total angle of which the lever arm is arranged to pivot between its first position and its third position is between 80° and 100°, for example 90° or around 90°.

The third position may e.g. be an end position of the lever arm, in which the lever arm is arranged when the clamping member is in its clamped state.

However, the lever arm may typically be moved in a continuous manner, from the first position in which the clamping member is in its fully open state (and thus the vehicle clamping portion of the clamping member is separated from the second surface of the vehicle by a relatively large gap, such as e.g. a fully open gap) e.g. when applying the load carrier foot to the vehicle, to the second position in which the clamping member is in its pre-setting state or its contact state depending on the position of the adjustment means (correspondingly, the vehicle clamping portion of the clamping member is separated from the second surface of the vehicle by a relatively small gap, such as e.g. a pre-set gap, being smaller than e.g. the fully open gap, in the pre-setting state, and the vehicle clamping portion of the clamping member is in contact with the second surface of the vehicle in its contact state).

The lever arm may additionally or alternatively be moved in a continuous manner, from the second position to the third position in which the clamping member is in its clamping state (and thus the vehicle clamping portion of the clamping member clamps the second surface of the vehicle).

Thus, in relation to the mentioned gaps above, said adjustment means is adapted to move said clamping member to close said pre-setting gap and bring said clamping member into said contact state in which said vehicle clamping portion is in contact with said second surface of the vehicle. In other words, said adjustment means is adapted to close said pre-setting gap before arranging said clamping member in said clamped state by said lever arm.

It should be understood when referring to a gap between the vehicle clamping portion and the second surface of the vehicle, the gap is between a surface (such as a vehicle clamping surface) of the vehicle clamping portion and the second surface of the vehicle.

As mentioned previously, the indexing means is configured to indicate to the user when the clamping member reaches its pre-setting state from its fully open state, and correspondingly, the indexing means is configured to indicate to the user when the lever arm reaches its second position from its first position. Furthermore, the indexing means may be configured to indicate to the user when the lever arm reaches the second position from the third position.

According to at least one example embodiment, the lever arm has at least three functionally distinct operation modes, in which the lever arm in each of the three operation modes is arrangeable in at least one corresponding position:
a first operation mode in which the vehicle clamping portion of the clamping member is physically separated from the second surface of the vehicle (e.g. as in the fully open state of the clamping member); no clamping force is applied from the clamping member to the second surface of the vehicle; and the lever arm is pivotably arrangeable in various positions, such as e.g. the above mentioned first position (which is an end position of the lever arm) corresponding to the fully open state of the clamping member;
a second operation mode in which the clamping member is in its pre-setting state or its contact state depending on the operation/position of the adjustment means; no significant clamping force is applied from the clamping member (but as previously stated, in the contact state the vehicle clamping portion is in contact with the second surface of the vehicle and is thus exerting a minor force to the second surface); and the lever arm is arrangeable in a (one) second position;
a third operation mode in which the clamping member is in clamping contact with said second surface of the vehicle (e.g. as in the clamped state of the clamping member), i.e. the vehicle clamping portion is in contact with the second surface of the vehicle and provides a clamping force between said vehicle support surface and said vehicle clamping portion; and the lever arm is pivotably arrangeable in various positions corresponding to various clamping forces, such as e.g. the above mentioned third position (which is and end position of the lever arm) corresponding to the clamped state of the clamping member.

In the third operation mode, the lever arm is thus operable to operate said clamping member and thereby vary said clamping force between said vehicle support surface and said clamping member.

Thus, in its first operation mode the lever arm is pivotable (i.e. may pivot upon application of a force e.g. from a user) in accordance with the first pivoting movement, in order to move the clamping member relative (i.e. to and away from) the second surface, e.g. to move the clamping member from its fully open state to, but not necessarily including, its pre-setting state. In its second operation mode, the lever arm is fixed (i.e. not pivotable other than by changing the operation mode of the lever arm from its second operation mode to any one of the first and third operation modes), as the adjustment means is adapted to move the clamping member along the elongated connecting member. In its third operation mode the lever arm is pivotable in order to vary the clamping force applied from the clamping member to the second surface of the vehicle. In the third operation mode, the lever arm is typically pivotable between the second position and an end position (i.e. corresponding to the second pivoting movement).

According to at least one example embodiment, the lever arm comprises at least two end positions, a first end position corresponding to the first position, and a second end position corresponding to the second position.

As the indexing means is configured to indicate to the user that said clamping member reaches its pre-setting state, the indexing means is also configured to indicate to the user that the lever arm is in (or moved into and/or moved out of) its second operation mode, or its second position.

The indexing means is configured to indicate to the user when the operation mode of the lever arm is changed from its first operation mode to its second operation mode. According to at least one example embodiment, the indexing means additionally is configured to indicate to the user when the operation mode of the lever arm is changed from its second operation mode to its third operation mode. This may e.g. be embodied by the male and female connecting arrangement discussed previously.

According to at least one example embodiment, said body arrangement comprises a first portion comprising said vehicle support surface, and comprises a second portion comprising a load carrier bar support surface for supporting the load carrier bar.

Thus, the body arrangement may be adapted to support (or rest against) a surface of the vehicle, and be adapted to support the load carrier bar. The body arrangement, the first portion and the second portion may be made in one piece or alternatively be comprised of separate pieces/parts. For example, the first portion may comprise, or be comprised of, a damping element made of e.g. rubber, in order not to scratch the first surface of the vehicle.

According to at least one example embodiment, said clamping member comprises a load carrier bar clamping portion configured to clamp said load carrier foot to the load carrier bar.

Hereby, the clamping member is adapted to clamp the load carrier foot to both the vehicle and the load carrier bar.

According to at least one example embodiment, said load carrier bar clamping portion comprises a load carrier bar clamping surface adapted to clamp an internal surface of the load carrier bar.

Hereby, the load carrier foot may be attached to the load carrier bar in a simple manner. The clamping surface is preferably comprised of a single clamping surface adapted to, when being clamped to said internal surface of the load carrier bar, face at least in a direction of the gravitational force. According to at least one example embodiment, the clamping surface is comprised of a single clamping surface adapted to, when being clamped to said internal surface of the load carrier bar, face solely in a direction of the gravitational force.

According to at least one example embodiment, the clamping surface is comprised in a clamping portion surface, wherein said clamping portion surface is curved with a predetermined radius. For example, the clamping portion surface may be convexly shaped.

According to at least one example embodiment, said lever arm arrangement is, upon pivoting said lever arm, adapted to arrange said clamping member such that said load carrier bar clamping portion clamps the load carrier bar.

That is, in said clamped state of the clamping member, the lever arm arrangement is adapted to clamp to both the second surface of the vehicle and the internal surface of the load carrier bar.

The clamping of the clamping member to the load carrier bar may e.g. be achieved by said second pivoting movement.

The clamping member may comprised a clamping connecting portion connecting the load carrier bar clamping portion and the vehicle clamping portion. According to at least one example embodiment, the clamping connecting portion, the load carrier bar clamping portion and the vehicle clamping portion is made in one piece. According to at least one example embodiment, the clamping connecting portion, the load carrier bar clamping portion and the vehicle clamping portion is fixedly attached to each other (i.e. they are not rotatable or pivotable relative each other).

According to at least one example embodiment, said body arrangement comprises at least two opposite lateral sides which, when said load carrier foot is correctly attached to a load carrier bar, each has a main extension along the main extension of the load carrier bar, and wherein the lever arm is pivotably arranged to only one of the two opposite lateral sides.

According to at least one example embodiment, each one of the two opposite lateral sides has a surface which is perpendicular to the main direction of the vehicle. According to at least one example embodiment, each one of the two opposite lateral sides has a surface which is parallel to the main extension of the lever arm.

In other words, the lever arm is sidely hinged to the body arrangement. Hereby, the lever arm is adapted not to undesirably encounter parts and portions of the load carrier foot e.g. arranged in between the two lateral sides of the body arrangement. Moreover, the lever arm may of a simple and cost-effective design.

According to at least one example embodiment, the load carrier foot is adapted to be attached to a roof rack or a roof railing of a vehicle.

In other words said vehicle support surface of said body arrangement is adapted to be positioned against the roof rack or roof railing. That is, the first surface and the second surface of the vehicle are comprised in said roof rack or roof railing.

According to at least one example embodiment, the load carrier foot is adapted to be attached to a roof rack or roof rail which has a dimension in the transversal direction of the roof rack or roof rail (i.e. in a direction being perpendicular to the main extension of the roof rack or roof rail) of between 0 mm and 140 mm, such as e.g. between 50 mm and 120 mm, for example between 70 mm and 100 mm. According to at least one example embodiment, the components of the load carrier foot, such as e.g. the clamping member, the lever arm arrangement and the indexing means, are adapted in such a way that the vehicle clamping portion is distant from said second surface when said clamping member is in its pre-setting state. According to at least one example embodiment, the components of the load carrier foot, such as e.g. the clamping member, the lever arm arrangement and the indexing means, are adapted in such a way that the pre-setting gap ensures that the vehicle clamping portion is close enough to said second surface, e.g. close enough to enable the adjustment means to move the clamping member in such a way that the vehicle clamping portion comes into contact with said second surface.

According to at least a second aspect of the present invention, a load carrier arrangement is provided. The load carrier arrangement comprises a load carrier bar and a load carrier foot according to the first aspect of the present invention.

According to at least a third aspect of the present invention, a combination of a roof rack or roof rail, and a load carrier foot according to the first aspect of the present invention, or a load carrier arrangement according to the second aspect of the present invention is provided.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1a illustrates a load carrier foot in accordance with at least one example embodiment of the invention;
Fig. 1b illustrates an exploded view of the load carrier foot in Fig. 1b;
Fig. 1c illustrates the lever arm arrangement from a different view compared to the view in Fig. 1b;
Fig. 2a - Fig. 2b show different states and various positions of parts of the load carrier foot in accordance with at least one example embodiment of the invention;
Fig. 3a - Fig. 3d show different states and various positions of the load carrier foot in accordance with at least one example embodiment of the invention.

### Detailed description of the drawings

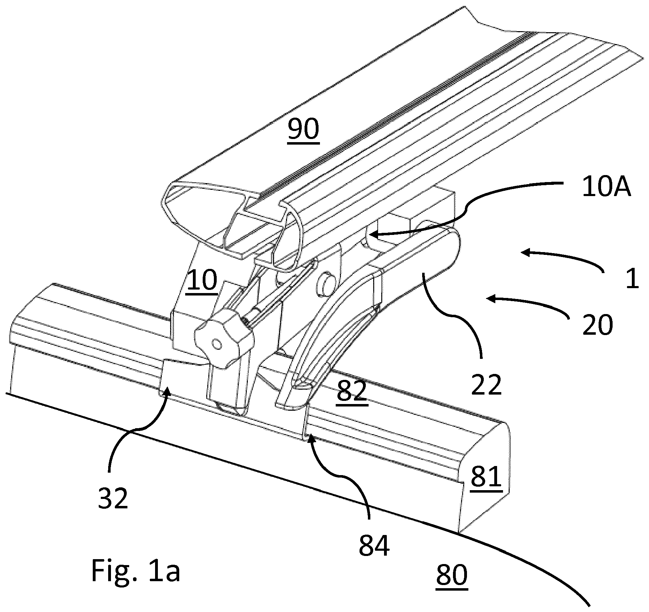

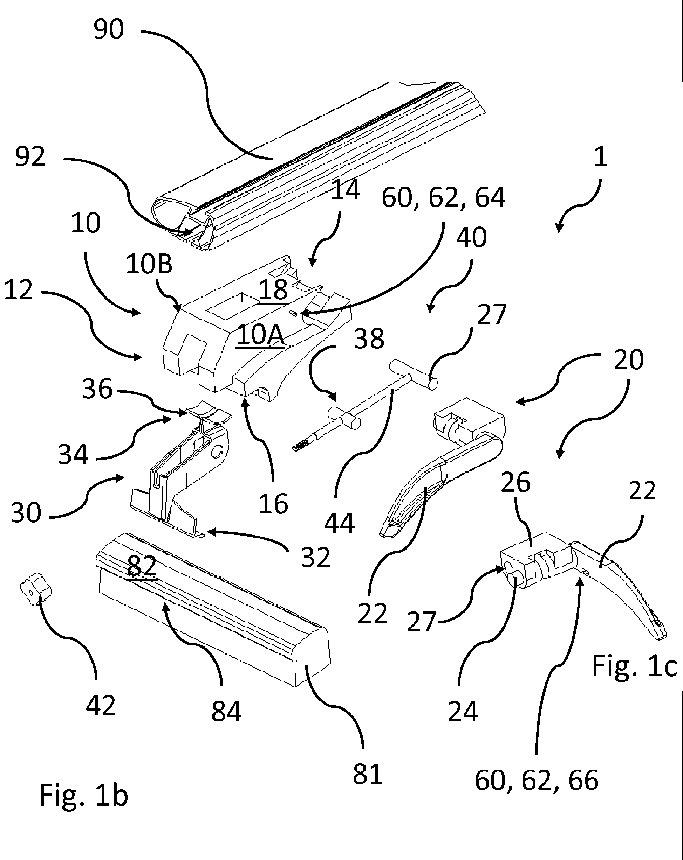

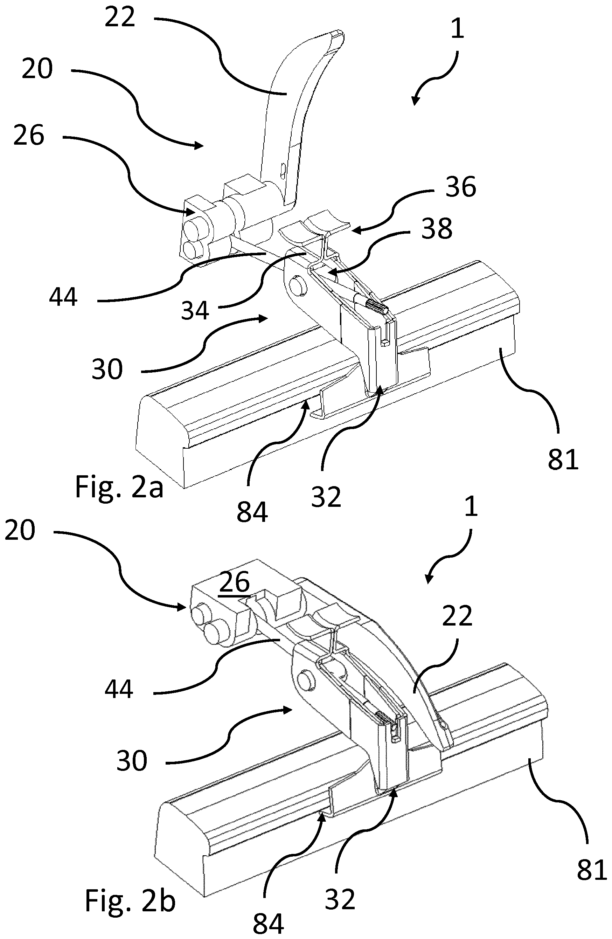

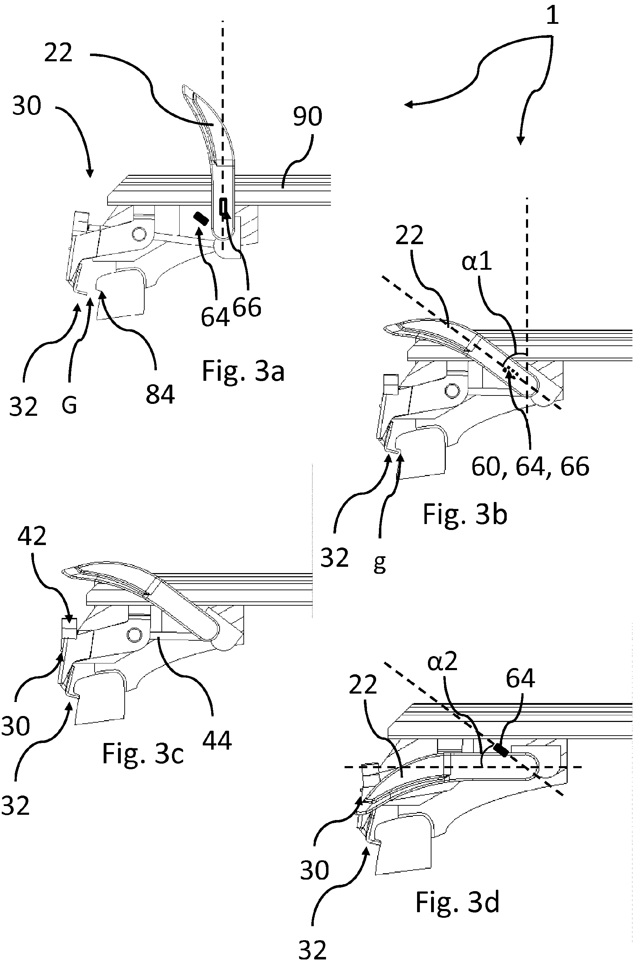

Fig. 1a and Fig. 1b illustrate the same load carrier foot 1, in accordance with one example embodiment of the invention, while Fig. 2a and Fig. 2b as well as Fig. 3a, Fig. 3b, Fig. 3c and Fig. 3d illustrate various states of the load carrier foot 1 of Fig. 1a and Fig. 1b. First, the structure and the components of the load carrier foot 1, as well as how the different components interact with each other, will be described with reference to Fig. 1a, Fig. 1b and Fig. 1c, and second, the procedure of attaching the load carrier foot 1 to a vehicle 80 and a load carrier bar 90 will be described with reference to Fig. 2a and Fig. 2b, and Fig. 3a, Fig. 3b, Fig. 3c and Fig. 3d, respectively.

In Fig. 1a the load carrier foot 1 is shown when being attached to a surface 84 of the vehicle 80 (of which only a part is shown in Fig. 1a) and a load carrier bar 90, and in Fig. 1b the same load carrier foot 1 is shown in an exploded view. Thus, the load carrier foot 1 in Fig. 1a and Fig. 1b will be described together, and for increased readability some reference numerals are only indicated in Fig. 1b.

The load carrier foot 1 comprises a body arrangement 10 having a first portion 12 adapted to be positioned to (or connected/attached to) the vehicle 80, and a second portion 14 adapted to be positioned to (or connected/attached to) the load carrier bar 90. The first portion 12 comprises a vehicle support surface 16 adapted to rest against a first surface 82 of the vehicle 80, and the second portion 14 comprises a load carrier bar support surface 18 adapted to support the load carrier bar 90.

In Fig. 1a and Fig. 1b, the vehicle 80 is arranged with a roof rack 81 (or roof railing 81) and thus, the load carrier foot 1 is adapted to be attached to the roof rack 81 of the vehicle 80. In other words the vehicle support surface 16 of said body arrangement 10 is adapted to be positioned against and connected to the roof rack 81. That is, the first surface 82 and the second surface 84 of the vehicle 80 are comprised in the roof rack 81. In other embodiments, the load carrier foot 1 may be adapted to be attached to the roof of the vehicle 80.

The body arrangement 10 shown in Fig. 1a and Fig. 1b is made in one piece, and may simply be referred to as the body 10 of the load carrier foot 1.

In order to enable attachment of the load carrier foot 1 to the vehicle 80, the load carrier foot 1 comprises a lever arm arrangement 20 and a clamping member 30 adapted to attached the load carrier foot 1 to the vehicle 80. The clamping member 30 comprises a vehicle clamping portion 32 configured to clamp the second surface 84 of the vehicle 80.

The clamping member 30 further comprises a load carrier bar clamping portion 34 (shown best in Fig. 1b) configured to clamp the load carrier foot 1 to the load carrier bar 90. More specific, the load carrier bar clamping portion 34 comprises a load carrier bar clamping surface 36 adapted to clamp an internal surface 92 of the load carrier bar 90.

The clamping member 30 is operatively connected to the lever arm arrangement 20 by an elongated connecting member 44. Thus, the lever arm arrangement 20 may move the clamping member 30 by moving the elongated connecting member 44.

The load carrier foot 1 further comprises an adjustment arrangement 40 having an adjustment means 42, here illustrated as a turning knob 42 or a hand wheel 42, and the elongated connecting member 44 mentioned previously. The adjustment means 42 is fixedly connected to an end portion of the elongated connecting member 44 and thus adapted to rotate the elongated connecting member 44 by a rotation of the adjustment means 42. Moreover, as illustrated in Fig. 1a and Fig. 1b, the elongated connecting member 42 threadedly engages a clamping member pin 38 of the clamping member 30 (the clamping member pin 38 is in Fig. 1b shown in its engaged state with the elongated connecting member 42 for enhanced clarity). Thus, external threads of the elongated connecting member 42 are configured to engage with internal matching threads of the clamping member pin 38. Hereby, upon rotation of the adjustment means 42 and the elongated connecting member 44, the external threads of the elongated connecting member 44 pushes the internal threads of the clamping member pin 38 whereby the hereby move the clamping member 30 along the elongated connecting member 44 (this is referred to as an adjustment means induced movement of the clamping member 30 below).

Fig. 1c shows the lever arm arrangement of Fig. 1a and 1b, but from a different view. As seen in Fig. 1c, the lever arm arrangement 20 comprises a pivotable lever arm 22 and a pivotable axle 24 to which the lever arm 22 is connected. The pivotable axle 24 is comprised in a cam portion 26 of the lever arm arrangement 20. Thus, by pivoting the lever arm 22, the pivotable axle 24 pivots together with the cam portion 26.

As best shown in Fig. 1b, the body arrangement 10 comprises at least two opposite lateral sides or lateral side walls, i.e. a first lateral side or side wall 10A and a second lateral side or side wall 10B. The lever arm 22 is attached only to the first lateral side wall 30A, and is thus side-hingedly arranged to the body arrangement 10. As illustrated in Fig. 1b, the two lateral side walls 10A, 10B each has a surface which is parallel to the main extension of the load carrier bar 90 (i.e. when the load carrier foot 1 is correctly attached to a load carrier bar 90), and parallel to a main extension of the lever arm 22.

Moreover, as illustrated in Fig. 1b, the elongated connecting member 44 is connected to (or engages) a cam portion pin 27 of the lever arm arrangement 20 (the cam portion pin 27 is in Fig. 1b shown in its connected/engaged state with the elongated connecting member 44 for enhanced clarity; cam portion pin 27 is also shown in Fig. 1c). The cam portion pin 27 is eccentrically arranged in the cam portion 26 and hence, as the lever arm 22 is pivoted and the cam portion 26 is rotated, the elongated connecting member 44 is moved (together with the clamping member 30) in a direction following the rotational movement of the cam portion 26. Thus, the clamping member 30 may be described as being operatively connected to the cam portion 26 of the lever arm arrangement 20 (i.e. the lever arm 22 is operatively connected to the clamping member 30 via the pivotable axle 24, the cam portion 26, the cam portion pin 27 and the elongated connecting member 44, the latter being connected to the clamping member 30 via the clamping member pin 38). Stated differently, as the elongated connecting member 44 is connected to clamping member 30 and the cam portion 26 of the lever arm arrangement, the elongated connecting member 44 is extending in a direction away from the clamping member 30 towards the cam portion 26. Thus, a pivoting movement of the lever arm 22, which results in a rotational movement of the cam portion 26, results in that clamping member 30 is moved in a direction (at least partly) towards the cam portion 26. Thus the vehicle clamping portion 32 is moved closer to the second surface 84 of the vehicle 80. As shown in Fig. 1a and Fig. 1b, the elongated connecting member 44 has a main extension component in a direction parallel to the main extension of the load carrier bar 90.

The lever arm arrangement 20, the clamping member 30, and the elongated connecting member 42 may be referred to as a tensioning arrangement of the load carrier foot 1.

As shown in Fig. 1b and Fig. 1c (and which will be further described with reference to Figs. 3a-3d), the load carrier foot 1 comprises indexing means 60 configured to indicate to the user when the clamping member 30 has reached a certain state (i.e. the pre-setting state described with reference to Fig. 3b).

The indexing means 60 shown in Fig. 1b and Fig. 1c comprises a male and female connecting arrangement 62 having a male protrusion 64 arranged in an outer surface of the body arrangement 10 (or more specific in an outer surface of the first lateral side 10A of the body arrangement 10), and a female indentation 66 arranged in an outer surface of the lever arm 22. The male protrusion 64 is shaped and dimensioned to enable engagement with the female indentation 66. The male and female connecting arrangement may be arranged and formed in various ways, for example, the male protrusion may be arranged in the outer surface of the lever arm 22 and the female indentation may be arranged in the outer surface of the body arrangement 10.In another example, the indexing means 60 is additionally or alternatively arranged inside the pivotable axle 24.

The attachment of the load carrier foot 1 to the vehicle 80 and the load carrier bar 90 will now be described, first with reference to Fig. 2a and Fig. 2b in which the two end states, i.e. a fully open state and a clamped state, of the load carrier foot 1 and the clamping member 30 are illustrated respectively, and second with reference to Figs. 3a-3d in which the two end states as well as two intermediate state, i.e. a pre-setting state and a contact state, of the load carrier foot 1 and the clamping member 30 are illustrated.

Fig. 2a and Fig. 2b illustrate parts of the load carrier foot 1 of Fig. 1a and Fig. 1b (for increased readability the body arrangement 10 is not shown, and only some of the reference numerals are repeated for Fig. 2a and Fig. 2b). In Fig. 2a, the load carrier foot 1 is in its fully open state and may thus easily be applied and positioned in relation to the vehicle 80 (here illustrated as a roof rack 81) and the load carrier bar (not shown in Fig. 2a or Fig. 2b). In the fully open state the vehicle clamping portion 32 is distant from the second surface 84 of the vehicle 80. In Fig, 2b, the load carrier foot 1 is in its clamped state and the clamping member 30 clamps the load carrier foot 1 to the vehicle 80 and the load carrier bar 90. More specifically, in the clamped state, the vehicle clamping portion 32 clamps the second surface 84 and thus exerts a clamping force from the vehicle clamping portion 32 to the vehicle support surface (reference numeral 16 shown in Fig. 1b), thus clamping the load carrier foot 1 to the vehicle 80 (here embodied as being clamped to the roof rack 81).

As shown in Fig. 2a and Fig. 2b, the clamping member 30 is moved from its fully open state to its clamped state at least by using the lever arm arrangement 20 and the elongated connecting member 44. Thus, (as described previously) a pivoting movement of the lever arm 22, results in a rotational movement of the cam portion 26, which results in that the elongated connecting member 44 pulls the clamping member 30 in a direction (at least partly) towards the cam portion 26. Hereby, the vehicle clamping portion 32 is moved closer to the second surface 84 of the vehicle 80, and may thus clamp to the second surface 84.

Moreover, the elongated connecting member 44 is attached to the clamping member 30 by means of the clamping member pin 38, the latter being arranged on the clamping member 30 in such a way that a movement of the elongated connecting member 44 upon rotation of the camp portion 26, results in a vertical movement of clamping member 30 (i.e. in addition to the movement of the clamping member 30 in the horizontal direction towards the cam portion 26). Hereby, the load carrier bar clamping portion 34, upon pivoting said lever arm, is configured to be pushed in the vertical direction (i.e. typically in a direction of the gravitational force) and thereby clamp to load carrier bar (reference numeral 90 in Fig. 1a and Fig. 1b). That is, the load carrier bar clamping surface 36 may clamp to the internal surface (reference numeral 92 in Fig. 1b) of the load carrier bar.

The function of the indexing means 60 and the two intermediate states will now be described with reference to Figs. 3a-3d (again, for increased readability only some of the reference numerals are repeated for Fig. 3a-3d).

In Fig. 3a, the fully open state of the clamping member 30 is shown. In the fully open state, the lever arm 22 is arranged in a first position (being an end position of the lever arm 22). In the fully open state the vehicle clamping portion 32 is distant from the second surface 84 by a relatively large gap G.

In Fig. 3b, the lever arm 22 has been pivoted relative its first position shown in Fig. 3a, to a second position, and the lever arm 22 has thus induced a movement of the clamping member 30 in which the vehicle clamping portion 32 is closer the second surface 84, by the lever arm arrangement mechanism previously described. The state of the clamping member 30 in Fig. 3b is referred to as a pre-setting state. In other words, the lever arm arrangement 20 has moved the clamping member 30 from its fully open state to its pre-setting state by a first pivoting movement of the lever arm 22. The first pivoting movement is thus defined as the pivoting movement of the lever arm 22 from its first position to its second position.

The pre-setting state is defined by the activation of the indexing means 60. That is, for the exemplary indexing means 60 illustrated in Fig. 1a-1c, the male protrusion 64 is engaged with the female indentation 66 (indicated with a blank square in order to show that female indentation 66 is arranged on the side of the lever arm 22 facing the load carrier bar 90), when the clamping member 30 reaches its pre-setting state. In the pre-setting state, the vehicle clamping portion 32 is distant from the second surface 84 by a relatively small gap g (i.e. small compared to the relatively large gap G shown in Fig. 3a).

The angle of which the lever arm 22 rotates from its first position to its second position is thus predefined (and dependent on the indexing means 60). The angle may be referred to as a first pivoting angle α1 and may e.g. be between 20° and 45°.

In Fig. 3c, the adjustment means 42 has moved the clamping member 30 along the elongated connecting member 44 by the adjustment means induced movement previously described. Thus, the clamping member 30 has been moved from its pre-setting state to a contact state in which the vehicle clamping portion 32 is in contact with the second surface 84. As shown in Fig. 3b and Fig. 3c, the lever arm 22 is held in the second position as the clamping member 30 is moved from its pre-setting state to its contact state.

In Fig. 3d the lever arm 22 has been pivoted relative its second position shown in Fig. 3b and fig. 3c, to a third position, and the lever arm 22 has thus induced a movement of the clamping member 30 in which the vehicle clamping portion 32 now clamps the second surface 84. The state of the clamping member 30 in Fig. 3d is referred to as the clamped state (as shown in Fig. 2b). In other words, the lever arm arrangement has moved the clamping member 30 from its contact state to its clamped state by a second pivoting movement of the lever arm 22. The second pivoting movement is thus defined as the pivoting movement of the lever arm 22 from its second position to its third position.

When moving the lever arm 22 from its second position to its third position, and thus moving the clamping member 30 from its contact state to its clamped state, the indexing means 60 are inactivated. That is, for the exemplary indexing means 60 illustrated in Fig. 1a-1c, the male protrusion 64 is disengaged from the female indentation 66. For disengaging the male protrusion 64 from the female indentation 66, an extra force is needed. Thus, the indexing means 60 at least temporarily prevent lever arm induced movement of the clamping member 30.

The angle of which the lever arm 22 rotates from its second position to its third position is predefined (and dependent on the indexing means 60). The angle may be referred to as a second pivoting angle α2 and may e.g. be between 45° and 70°.

The skilled person realizes that a number of modifications of the embodiments described herein are possible without departing from the scope of the invention, which is defined in the appended claims.

## Claims

1. A load carrier foot (1) for attaching a load carrier bar (90) to a vehicle (80), said load carrier foot comprising:
a body arrangement (10) having a vehicle support surface (16) adapted to be positioned against a first surface (82) of the vehicle,
a lever arm arrangement (20) comprising a cam portion (26) having a pivotable axle (24), and a pivotable lever arm (22) connected to said pivotable axle;
a clamping member (30) being operatively connected to said cam portion and said lever arm, said clamping member having a vehicle clamping portion (32) configured to clamp a second surface (84) of the vehicle,
an adjustment arrangement (40) having adjustment means (42) and an elongated connecting member (44), wherein said elongated connecting member connects said lever arm arrangement and said clamping member, and wherein said adjustment means is adapted to move said clamping member along said elongated connecting member,
wherein said lever arm arrangement is adapted to move said clamping member from a fully open state to a pre-setting state by a first pivoting movement of said lever arm, and wherein said adjustment means is adapted to move said clamping member from said pre-setting state to a contact state in which said vehicle clamping portion is in contact with said second surface of the vehicle, and
wherein said lever arm arrangement is adapted to move said clamping member from said contact state to a clamped state in which said vehicle clamping portion clamps said second surface of the vehicle, by a second pivoting movement of said lever arm,
**characterized in that** said load carrier foot further comprises indexing means (60) configured to by visually, by sound, and/or by sensory feedback indicate to the user when said clamping member has reached said pre-setting state from said fully open state.

2. The load carrier foot according to claim 1, wherein said indexing means (60) is adapted to at least temporarily prevent lever arm induced movement of the clamping member (30).

3. The load carrier foot according to any one of the preceding claims, wherein said indexing means (60) comprises a male and female connecting arrangement (62).

4. The load carrier foot according to claim 3, wherein said male and female connecting arrangement (62) comprises a male protrusion (64) arranged in an outer surface of the body arrangement (10) or of the lever arm (22), and a female indentation (66) arranged in an outer surface of the other one of the lever arm and the body arrangement, said male protrusion being adapted to engage with said female indentation when said clamping member (30) reaches said pre-setting state from said fully open state.

5. The load carrier foot according to any one of the preceding claims, wherein said elongated connecting member (44) is connected to said cam portion (26), and wherein said cam portion upon pivoting said lever arm (22) is adapted to move at least partly in a direction away from said clamping member (30) in order to move said vehicle clamping portion (32) closer to said second surface (84) of the vehicle.

6. The load carrier foot according to any one of the preceding claims, wherein said adjustment means (42) is adapted to rotate said elongated connecting member (44), and wherein said elongated connecting member threadedly engages said clamping member (30) in order for said clamping member to be movable along said elongated connecting member upon rotation of said elongated connecting member.

7. The load carrier foot according to any one of the preceding claims, wherein said lever arm (22) is arrangeable in a first position when said clamping member (30) is in its fully open state, and is arrangeable in a second position when said clamping member is in its pre-setting state, and wherein a movement of said lever arm between its first position to its second position is defined as said first pivoting movement.

8. The load carrier foot according to claim 7, wherein the angle (α1) between said first position and said second position of said lever arm (22) is predefined.

9. The load carrier foot according to any one of claims 7-8, wherein said lever arm (22) is arrangeable in a third position when said clamping member (30) is in its clamped state, and wherein said lever arm is in its second position when said clamping member is in its contact state, and wherein a movement of said lever arm between its second position to its third position is defined as said second pivoting movement.

10. The load carrier foot according to claim 9, wherein the angle (α2) between said second position and said third position of said lever arm (22) is predefined.

11. The load carrier foot according to any one of the preceding claims, wherein said body arrangement (10) comprises a first portion (12) comprising said vehicle support surface (16), and comprises a second portion (14) comprising a load carrier bar support surface (18) for supporting the load carrier bar (90), and wherein said clamping member (30) comprises a load carrier bar clamping portion (32) configured to clamp said load carrier foot to the load carrier bar.

12. The load carrier foot according to claim 11, wherein said load carrier bar clamping portion (32) comprises a load carrier bar clamping surface (36) adapted to clamp an internal surface (92) of the load carrier bar (90).

13. The load carrier foot according to any one of claims 11-12, wherein said lever arm arrangement (20) upon pivoting said lever arm (22) is adapted to arrange said clamping member (30) such that said load carrier bar clamping portion (32) clamps the load carrier bar (90).

14. The load carrier foot according to any one of the preceding claims, wherein said body arrangement (10) comprises at least two opposite lateral sides (10A, 10B) which, when said load carrier foot is correctly attached to a load carrier bar (90), each has a main extension along the main extension of the load carrier bar, and wherein the lever arm (22) is pivotably arranged to only one of the two opposite lateral sides.

15. The load carrier foot according to any one of the preceding claims, being adapted to be attached to a roof rack or a roof railing (81) of a vehicle (80).

## Patentansprüche

1. Lastträgerfuß (1) zum Befestigen einer Lastträgerstange (90) an einem Fahrzeug (80), der Lastträgerfuß umfassend:
eine Karosserieanordnung (10) mit einer Fahrzeugstützfläche (16), die geeignet ist, gegen eine erste Oberfläche (82) des Fahrzeugs positioniert zu werden,
eine Hebelarmanordnung (20), die einen Nockenabschnitt (26) mit einer schwenkbaren Achse (24) und einen schwenkbaren Hebelarm (22) umfasst, der mit der Schwenkachse verbunden ist;
ein Klemmelement (30), das funktionsfähig mit dem Nockenabschnitt und dem Hebelarm verbunden ist, wobei das Klemmelement einen Fahrzeugklemmabschnitt (32) aufweist, der zum Klemmen einer zweiten Oberfläche (84) des Fahrzeugs konfiguriert ist,
eine Einstellanordnung (40) mit einem Einstellmittel (42) und einem länglichen Verbindungselement (44), wobei das längliche Verbindungselement die Hebelarmanordnung und das Klemmelement verbindet und wobei das Einstellmittel angepasst ist, um das Klemmelement entlang des länglichen Verbindungselements zu bewegen,
wobei die Hebelarmanordnung angepasst ist, um das Klemmelement durch eine erste Schwenkbewegung des Hebelarms aus einem vollständig geöffneten Zustand in einen Voreinstellzustand zu bewegen, und wobei die Einstellvorrichtung angepasst ist, um das Klemmelement aus dem Voreinstellzustand in einen Kontaktzustand zu bewegen, in dem der Fahrzeugklemmabschnitt in Kontakt mit der zweiten Oberfläche des Fahrzeugs steht, und
wobei die Hebelarmanordnung angepasst ist, um das Klemmelement aus dem Kontaktzustand in einen Klemmzustand zu bewegen, in dem der Fahrzeugklemmabschnitt die zweite Oberfläche des Fahrzeugs durch eine zweite Schwenkbewegung des Hebelarms klemmt,
**dadurch gekennzeichnet, dass** der Lastträgerfuß ferner Indexiermittel (60) umfasst, die konfiguriert sind, um dem Benutzer durch visuelles, akustisches und/oder sensorisches Feedback anzuzeigen, wenn das Klemmelement den Voreinstellzustand aus dem vollständig geöffneten Zustand erreicht hat.

2. Lastträgerfuß nach Anspruch 1, wobei die Indexiermittel (60) angepasst sind, um zumindest vorübergehend eine durch den Hebelarm induzierte Bewegung des Klemmelements (30) zu verhindern.

3. Lastträgerfuß nach einem der vorhergehenden Ansprüche, wobei die Indexiermittel (60) eine Stecker- und Buchsenverbindungsanordnung (62) umfassen.

4. Lastträgerfuß nach Anspruch 3, wobei die Stecker- und Buchsenverbindungsanordnung (62) einen in einer Außenfläche der Karosserieanordnung (10) oder des Hebelarms (22) angeordneten Stiftvorsprung (64) und eine in einer Außenfläche des anderen des Hebelarms und der Karosserieanordnung angeordnete Buchseneinbuchtung (66) umfasst, wobei der Stiftvorsprung so ausgebildet ist, dass er mit der Buchseneinbuchtung in Eingriff kommt, wenn das Klemmelement (30) den Voreinstellzustand aus dem vollständig geöffneten Zustand erreicht.

5. Lastträgerfuß nach einem der vorhergehenden Ansprüche, wobei das längliche Verbindungselement (44) mit dem Nockenabschnitt (26) verbunden ist, und wobei der Nockenabschnitt beim Schwenken des Hebelarms (22) geeignet ist, sich mindestens teilweise in einer Richtung weg von dem Klemmelement (30) zu bewegen, um den Fahrzeugklemmabschnitt (32) näher an die zweite Oberfläche (84) des Fahrzeugs zu bewegen.

6. Lastträgerfuß nach einem der vorhergehenden Ansprüche, wobei die Einstellmittel (42) angepasst sind, um das längliche Verbindungselement (44) zu drehen, und wobei das längliche Verbindungselement mit Gewinde in das Klemmelement (30) eingreift, damit das Klemmelement beim Drehen des länglichen Verbindungselements entlang des länglichen Verbindungselements beweglich ist.

7. Lastträgerfuß nach einem der vorhergehenden Ansprüche, wobei der Hebelarm (22) in einer ersten Position angeordnet sein kann, wenn sich das Klemmelement (30) in seinem vollständig geöffneten Zustand befindet, und in einer zweiten Position angeordnet sein kann, wenn sich das Klemmelement in seinem Voreinstellzustand befindet, und wobei eine Bewegung des Hebelarms zwischen seiner ersten Position und seiner zweiten Position als die erste Schwenkbewegung definiert ist.

8. Lastträgerfuß nach Anspruch 7, wobei der Winkel (α1) zwischen der ersten Position und der zweiten Position des Hebelarms (22) vorgegeben ist.

9. Lastträgerfuß nach einem der Ansprüche 7-8, wobei der Hebelarm (22) in einer dritten Position angeordnet sein kann, wenn sich das Klemmelement (30) in seinem Klemmzustand befindet, und wobei sich der Hebelarm in seiner zweiten Position befindet, wenn sich das Klemmelement in seinem Kontaktzustand befindet, und wobei eine Bewegung des Hebelarms zwischen seiner zweiten Position und seiner dritten Position als die zweite Schwenkbewegung definiert ist.

10. Lastträgerfuß nach Anspruch 9, wobei der Winkel (α2) zwischen der zweiten Position und der dritten Position des Hebelarms (22) vorgegeben ist.

11. Lastträgerfuß nach einem der vorhergehenden Ansprüche, wobei die Karosserieanordnung (10) einen ersten Abschnitt (12) umfasst, der die Fahrzeugstützfläche (16) umfasst, und einen zweiten Abschnitt (14) umfasst, der eine Lastträgerstangenstützfläche (18) zum Tragen der Lastträgerstange (90) umfasst, und wobei das Klemmelement (30) einen Lastträgerstangenklemmabschnitt (32) umfasst, der konfiguriert ist, um den Lastträgerfuß an der Lastträgerstange zu klemmen.

12. Lastträgerfuß nach Anspruch 11, wobei der Lastträgerstangenklemmabschnitt (32) eine Lastträgerstangenklemmfläche (36) umfasst, die zum Klemmen einer Innenfläche (92) der Lastträgerstange (90) ausgelegt ist.

13. Lastträgerfuß nach einem der Ansprüche 11-12, wobei die Hebelarmanordnung (20) beim Schwenken des Hebelarms (22) geeignet ist, das Klemmelement (30) so anzuordnen, dass der Lastträgerstangenklemmabschnitt (32) die Lastträgerstange (90) klemmt.

14. Lastträgerfuß nach einem der vorhergehenden Ansprüche, wobei die Karosserieanordnung (10) mindestens zwei gegenüberliegende Seitenwände (10A, 10B) umfasst, die, wenn der Lastträgerfuß korrekt an einer Lastträgerstange (90) befestigt ist, jeweils eine Hauptverlängerung entlang der Hauptverlängerung der Lastträgerstange aufweisen, und wobei der Hebelarm (22) schwenkbar nur zu einer der beiden gegenüberliegenden Seitenwände angeordnet ist.

15. Lastträgerfuß nach einem der vorhergehenden Ansprüche, der zur Befestigung an einem Dachträger oder einem Dachgeländer (81) eines Fahrzeugs (80) geeignet ist.

## Revendications

1. Pied de porte-charge (1) destiné à fixer une barre de porte-charge (90) à un véhicule (80), ledit pied de porte-charge comprenant :
un ensemble de corps (10) comportant une surface de support de véhicule (16) adaptée pour être positionnée contre une première surface (82) du véhicule,
un ensemble de bras de levier (20) comprenant une partie de came (26) comportant un axe pivotant (24), et un bras de levier pivotant (22) relié audit axe pivotant ;
un élément de serrage (30) fonctionnellement relié à ladite partie de came et audit bras de levier, ledit élément de serrage comportant une partie de serrage de véhicule (32) configurée pour serrer une deuxième surface (84) du véhicule,
un ensemble de réglage (40) comportant un moyen de réglage (42) et un élément de connexion allongé (44), ledit élément de connexion allongé connectant ledit ensemble de bras de levier et ledit élément de serrage, et ledit moyen de réglage étant adapté pour déplacer ledit élément de serrage le long dudit élément de connexion allongé,
dans lequel ledit ensemble de bras de levier est adapté pour déplacer ledit élément de serrage d'un état entièrement ouvert vers un état de préréglage par un premier mouvement de pivotement dudit bras de levier, et dans lequel ledit moyen de réglage est adapté pour déplacer ledit élément de serrage d'un état de préréglage vers un état de contact dans lequel ladite partie de serrage de véhicule est en contact avec ladite deuxième surface du véhicule, et
dans lequel ledit ensemble de bras de levier est adapté pour déplacer ledit élément de serrage dudit état de contact vers un état serré dans lequel ladite partie de serrage de véhicule serre ladite deuxième surface du véhicule, par un deuxième mouvement de pivotement dudit bras de levier,
**caractérisé en ce que** ledit pied de porte-charge comprend en outre un moyen d'indexation (60) configuré pour indiquer à l'utilisateur, visuellement, de manière sonore et/ou par retour sensoriel, que ledit élément de serrage a atteint ledit état de préréglage à partir dudit état entièrement ouvert.

2. Pied de porte-charge selon la revendication 1, dans lequel ledit moyen d'indexation (60) est adapté pour empêcher au moins temporairement un déplacement de l'élément de serrage (30) induit par le bras de levier.

3. Pied de porte-charge selon l'une quelconque des revendications précédentes, dans lequel ledit moyen d'indexation (60) comprend un ensemble de connexion mâle et femelle (62).

4. Pied de porte-charge selon la revendication 3, dans lequel ledit ensemble de connexion mâle et femelle (62) comprend une saillie mâle (64) disposée dans une surface extérieure de l'ensemble de corps (10) ou du bras de levier (22), et une indentation femelle (66) disposée dans une surface extérieure de l'autre parmi le bras de levier et l'ensemble de corps, ladite saillie mâle étant adaptée pour s'engager avec ladite indentation femelle lorsque ledit élément de serrage (30) atteint ledit état de préréglage à partir dudit état entièrement ouvert.

5. Pied de porte-charge selon l'une quelconque des revendications précédentes, dans lequel ledit élément de connexion allongé (44) est connecté à ladite partie de came (26), et dans lequel ladite partie de came, lors du pivotement dudit bras de levier (22), est adaptée pour se déplacer au moins partiellement dans une direction à distance dudit élément de serrage (30) afin de déplacer ladite partie de serrage de véhicule (32) plus près de ladite deuxième surface (84) du véhicule.

6. Pied de porte-charge selon l'une quelconque des revendications précédentes, dans lequel ledit moyen de réglage (42) est adapté pour faire tourner ledit élément de connexion allongé (44), et dans lequel ledit élément de connexion allongé engage ledit élément de serrage (30) par filetage pour permettre audit élément de serrage de se déplacer le long dudit élément de connexion allongé lors de la rotation dudit élément de connexion allongé.

7. Pied de porte-charge selon l'une quelconque des revendications précédentes, dans lequel ledit bras de levier (22) peut être disposé dans une première position lorsque ledit élément de serrage (30) est dans son état entièrement ouvert, et peut être disposé dans une deuxième position lorsque ledit élément de serrage est dans son état de préréglage, et dans lequel un déplacement dudit bras de levier entre sa première position et sa deuxième position est défini comme étant ledit premier mouvement de pivotement.

8. Pied de porte-charge selon la revendication 7, dans lequel l'angle (α1) entre ladite première position et ladite deuxième position dudit bras de levier (22) est prédéfini.

9. Pied de porte-charge selon l'une quelconque des revendications 7-8, dans lequel ledit bras de levier (22) peut être disposé dans une troisième position lorsque ledit élément de serrage (30) est dans son état serré, et dans lequel ledit bras de levier est dans sa deuxième position lorsque ledit élément de serrage est dans son état de contact, et dans lequel un déplacement dudit bras de levier entre sa deuxième position et sa troisième position est défini comme étant ledit deuxième mouvement de pivotement.

10. Pied de porte-charge selon la revendication 9, dans lequel l'angle (α2) entre ladite deuxième position et ladite troisième position dudit bras de levier (22) est prédéfini.

11. Pied de porte-charge selon l'une quelconque des revendications précédentes, dans lequel ledit ensemble de corps (10) comprend une première partie (12) comprenant ladite surface de support de véhicule (16), et comprend une deuxième partie (14) comprenant une surface de support de barre de porte-charge (18) pour supporter la barre de porte-charge (90), et dans lequel ledit élément de serrage (30) comprend une partie de serrage de barre de porte-charge (32) configurée pour serrer ledit pied de porte-charge sur la barre de porte-charge.

12. Pied de porte-charge selon la revendication 11, dans lequel ladite partie de serrage de barre de porte-charge (32) comprend une surface de serrage de barre de porte-charge (36) adaptée pour serrer une surface intérieure (92) de la barre de porte-charge (90).

13. Pied de porte-charge selon l'une quelconque des revendications 11 - 12, dans lequel ledit ensemble de bras de levier (20), lors du pivotement dudit bras de levier (22), est adapté pour disposer ledit élément de serrage (30) de manière à ce que ladite partie de serrage de barre de porte-charge (32) serre la barre de porte-charge (90).

14. Pied de porte-charge selon l'une quelconque des revendications précédentes, dans lequel ledit ensemble de corps (10) comprend au moins deux côtés latéraux opposés (10A, 10B), lesquels, lorsque ledit pied de porte-charge est fixé correctement à une barre de porte-charge (90), comportent respectivement une extension principale le long de l'extension principale de la barre de porte-charge, et dans lequel le bras de levier (22) est disposé de façon pivotante sur un seul des deux côtés latéraux opposés.

15. Pied de porte-charge selon l'une quelconque des revendications précédentes, adapté pour être fixé sur une galerie ou un rail de toit (81) d'un véhicule (80).
